# EUROPÄISCHE PATENTSCHRIFT

(11) **EP 2 118 788 B1**
(45) Veröffentlichungstag und Bekanntmachung des Hinweises auf die Patenterteilung: **20.04.2011**
(21) Anmeldenummer: 08707716.0
(22) Anmeldetag: 05.02.2008
(51) Int. Cl.: G06F 17/30, H04L 29/06, G06F 21/00

(54) **DATENVERARBEITUNGSSYSTEM UND VERFAHREN ZUM EMPFANG VON PERSONALISIERUNGSDATEN**
DATA PROCESSING SYSTEM AND METHOD FOR RECEIVING PERSONAL DATA
SYSTÈME DE TRAITEMENT DE DONNÉES ET PROCÉDÉ DE RÉCEPTION DE DONNÉES DE PERSONNALISATION

(30) Priorität: 05.02.2007 DE 102007006407
(43) Veröffentlichungstag der Anmeldung: 18.11.2009
(73) Patentinhaber: Bundesdruckerei GmbH, 10958 Berlin (DE)
(72) Erfinder: ACKERMANN, Ulrich, 14532 Kleinmachnow (DE); RIEGEL, Holger, 13403 Berlin (DE); STOYKE, André, 13595 Berlin (DE); HAGEDORN, Michael, 10115 Berlin (DE); SCHUSTER, Thilo, 73230 Kirchheim unter Teck (DE); SCHWARZE, Jochen-Ulrich, 73728 Esslingen (DE); LOHMANN, Jens, 10319 Berlin (DE)
(74) Vertreter: Richardt Patentanwälte
(86) Internationale Anmeldenummer: PCT/EP2008/001117
(87) Internationale Veröffentlichungsnummer: WO 2008/095736

(56) Entgegenhaltungen:
- WO-A-03/073309
- US-A1- 2004 199 614
- US-A1- 2005 125 491
- US-A1- 2006 136 351
- FRANK STEIMKE ET AL: "OSCI A Common Communications Standard for e-Government" ELECTRONIC GOVERNMENT LECTURE NOTES IN COMPUTER SCIENCE;;LNCS, SPRINGER BERLIN HEIDELBERG, BE, Bd. 2739, 1. Januar 2004 (2004-01-01), Seiten 250-255, XP019036288
- "OSCI Transport 1.2 : Design Principles, Security Objectives and Mechanisms"[Online] Mai 2002 (2002-05), Seiten 1-30, XP002484742 Bremen Gefunden im Internet: URL:http://www1.osci.de/sixcms/media.php/1 3/requirements.pdf> [gefunden am 2008-06-13]

## Beschreibung

Die Erfindung betrifft ein Datenverarbeiturigssystemyein, und Verfahren zum Empfang von Personalisierungsdaten.

Aus dem Stand der Technik sind verschiedene Formate und Übertragungsprotokolle zur Datenübertragung über Netzwerke, insbesondere das Internet, bekannt.

Hierzu gehört die Übertragung von Dokumenten in einem Format einer erweiterbaren Auszeichnungssprache (Extensible Markup Language - XML). XML ist ein Standard zur Modulierung von semi-strukturierten Daten in Form einer Baumstruktur, der vom World Wide Web Konsortium (W3C) definiert wird. XML-Dateien können beispielsweise mit Hilfe von SOAP (Simple Object Access Protocol) übertragen werden.

SOAP ist ein Übertragungsprotokoll, mit Hilfe dessen Daten zwischen Systemen ausgetauscht und Remote Procedure Calls durchgeführt werden können. SOAP stützt sich auf die Dienste anderer Standards, insbesondere XML zur Repräsentation der Daten und einer Transportschicht, wie zum Beispiel Hypertext Transfer Protocol, d.h. HTTP oder HTTPS.

Ein SOAP-Envelope ist ein Container, der ein optionales Header-Element und ein Body-Element der SOAP-Nachricht enthält. Im Header-Element der SOAP-Nachricht werden die Metainformationen der Nachricht untergebracht. Diese können Informationen über das Routing der Nachricht, über eine eventuelle Verschlüsselung und/oder die Zugehörigkeit zu einer Transaktion umfassen.

In dem Body-Element der Nachricht sind die Nutzdaten untergebracht. Daran anschließend können mögliche Anhänge folgen, die in Abhängigkeit von dem Transportprotokoll an die Nachricht angehängt werden können, wie zum Beispiel durch Nutzung von MIME (Multipurpose Internet Mail Extension).

Femer sind Webservices für die Datenübertragung über das Internet bekannt. Mit Hilfe von Webservices kann eine serviceorientierte Architektur (SOA) realisiert werden. Webservices bedienen sich SOAP für den Datenaustausch. Über eine Webservice-Beschreibungsdatei im Format WSDL (Webservices Description Language) erfolgt eine plattform-, programmiersprachen- und protokollunabhängige XML-Spezifikation zur Beschreibung eines Webservices. Insbesondere ist in einer WSDL-Datei des Webservices definiert, welche Daten eine Anforderung an den Webservice enthalten muss und welche Dienste der Webservice zur Verfügung stellt. Der Webservice kann in einem Verzeichnisdienst, insbesondere einem so genannten UDDI (Universal Description, Discovery and Integration) veröffentlicht werden.

Das Dokument US 2006/136351 (Angrish Rohan et Al) offenbart ein system zur Konvertierung zwischen Webservices Anforderungen in XML, mit SOAP als Übertragungsproptokoll, und Anforderungen in SQL Format.

OSCI (Online Services Computer Interface) ist ein weiterer Standard für ein Übertragungsprotokoll über Netzwerke, insbesondere das Internet. Als OSCI-Transport wird ein Protokollstandard bezeichnet, der zur vertraulichen und sicheren Übermittlung von digital signierten Dokumenten über das Internet dient.

OSCI-Transport-Nachrichten haben einen zweistufigen "Sicherheitscontainer". Dies ermöglicht Metadaten und Nutzdaten streng voneinander zu trennen und kryptographisch unterschiedlich zu behandeln. Die Nutzdaten einer OSCI-Transport-Nachricht werden so verschlüsselt, dass sie nur aufgrund einer entsprechenden Berechtigung dechriffiert werden können. Die Metadaten werden dagegen von einem so genannten OSCI-Intermediär für die Zwecke der Nachrichtenvermittlung an einen Service Provider benötigt.

Die Metadaten werden so kryptographisch verschlüsselt, dass sie der Intermediär entschlüsseln kann. Der OSCI-Intermediär ist im Allgemeinen als sicherer Applikationsserver realisiert. Der OSCI-Intermediär dient als "Mittler" zwischen einem Client ("Service Consumer") und dem dazugehörigen "**Dienstleistungserbringer"** (Service Provider), der allein zur Entschlüsselung der Nutzdaten berechtigt ist.

Der Erfindung liegt demgegenüber die Aufgabe zugrunde, ein verbessertes Datenverarbeitungssystem, und ein Verfahren zum Empfang von Anforderungen

Die der Erfindung zugrunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird ein Datenverarbeitungssystem zum Empfang von ersten und zweiten Anforderungen geschaffen. Die ersten Anforderungen haben ein erstes Format, wie zum.Beispiel OSCI, und werden mit einem ersten Übertragungsprotokoll, wie zum Beispiel OSCI-Transport, empfangen. Die zweiten Anforderungen haben ein anderes Format, wie zum Beispiel ein XML-Format, und werden auch mit einem anderen Übertragungsprotokoll empfangen, wie zum Beispiel mittels SOAP.

Ein erster Server des Datenverarbeitungssystems dient zum Empfang der ersten Anforderungen und zur Weiterleitung der in den ersten Anforderungen beinhalteten Personalisierungsdaten an ein Steuerungssystem einer Personalisierungsanlage. Der erste Server kann beispielsweise als OSCI-Intermediär ausgebildet sein. Ein zweiter Server des Datenverarbeitungssystems dient zum Empfang der zweiten Anforderungen. Hierzu kann der zweite Server beispielsweise einen entsprechenden Webservice implementieren, der zum Empfang der zweiten Anforderungen bereitgehalten wird.

Das Datenverarbeitungssystem hat ferner einen Konverter zur Formatkonvertierung der zweiten Anforderungen. Nach der Konvertierung leitet der Konverter die zweiten Anforderungen an den ersten Server weiter, sodass der erste Server die formatkonvertierten zweiten Anforderungen so wie die ersten Anforderungen weiterverarbeiten kann. Der erste Server kann daher seine Funktion als Intermediär auch hinsichtlich der zweiten Anforderungen erfüllen. Dies hat den Vorteil, dass die Weiterleitung von Personalisierungsdaten an das Steuerungssystem der Personalisierungsanlage in jedem Fall durch den ersten Server erfolgen kann, auch dann, wenn die Anforderung in einem anderen Format empfangen worden ist.

Die Erfindung ist besonders vorteilhaft, da hierdurch ein Datenverarbeitungssystem mit zumindest einer alternativen Schnittstelle geschaffen wird, an die Anforderungen in einem alternativen Format und einem alternativen Übertragungsprotokoll gerichtet werden können. Die Erfindung ist ferner besonders vorteilhaft, da dies mit Hilfe eines einzigen Intermediärs realisiert werden kann, der sowohl die ersten als auch die zweiten Anforderungen verarbeiten kann. Eine Duplizierung des Intermediärs, des Steuerungssystems und der Personalisierungsanlage kann also erfindungsgemäß vermieden werden.

Die Erfindung kann beispielsweise für die Personalisierung von Dokumenten-Rohlingen eingesetzt werden, um personalisierte Dokumente in einer gesicherten Produktionsumgebung herzustellen. Hierbei kann es sich um verschiedene Arten von papierbasierten oder anderen Dokumenten handeln, wie zum Beispiel Chipkarten.

Nach einer Ausführungsform der Erfindung erfolgt gemäß beider Übertragungsprotokolle jeweils eine gegenseitige Authentisierung basierend auf einem asymmetrischen Schlüsselpaar. Wenn der erste Server jedoch eine Anforderung nicht von einem externen Client, sondern von dem Konverter erhält, ist für diesen Fall in dem ersten Übertragungsprotokoll eine Ausnahme definiert, der zur Folge keine Authentisierung des Konverters gegenüber dem ersten Server erforderlich ist.

Dies hat den Vorteil, dass einerseits an der gegenseitigen Authentisierung auch zwischen dem zweiten Server und einem externen Client festgehalten werden kann, und andererseits der erste Server trotzdem ohne Sicherheitseinbuße als Intermediär auftreten kann, da er dem Konverter als virtuellen Client vertrauen kann; denn dieser ist ja schließlich Teil des Datenverarbeitungssystems selbst und keine externe Komponente.

Nach einer Ausführungsform der Erfindung erzeugt der Konverter aus einer empfangenen zweiten Anforderung ein oder mehrere Objekte eines dritten Formats. Zur Instanziierung einer dritten Anforderung werden die Methoden dieser Objekte aufgerufen. Die daraus resultierende dritte Anforderung ist inhaltsgleich mit der zweiten Anforderung und in das erste Format konvertiert. Die dritte Anforderung wird dann von dem Konverter als virtuellem Client über das erste Übertragungsprotokoll an den ersten Server übertragen.

Nach einer Ausführungsform der Erfindung erfolgt der Empfang der zweiten Anforderungen durch einen. Webservice. Der Webservice hat eine WSDL-Datei, die das zweite Format, d.h. ein XML-Format, der zweiten Anforderungen spezifiziert. Eine empfangene zweite Anforderung wird dann aus XML in ein oder mehrere Java-Objekte transformiert, wobei dies unter Verwendung der WSDL-Datei erfolgt. Solche Konverterfunktionen sind an sich aus dem Stand der Technik bekannt, wie zum Beispiel aus Apache AXIS und XMLBeans.

Ein Servlet ruft nach der XML-Java-Transformation die Methoden der Java-Objekte auf, um mit den von den Java-Objekten gelieferten Daten die dritte Anforderung zu generieren, die das erste Format aufweist.

Nach einer Ausführungsform der Erfindung werden zumindest erste und zweite Java-Objekte von dem Konverter generiert. Das erste Java-Objekt beinhaltet die verschlüsselten Personalisierungsdaten der Anforderung, also die Nutzdaten, und das zweite Java-Objekt beinhaltet die Metadaten, insbesondere ein Zertifikat.

Nach einer Ausführungsform der Erfindung werden die durch die ersten und zweiten Anforderungen von dem ersten Server empfangenen verschlüsselten Personalisierungsdaten zunächst zwischengespeichert. Das Steuerungssystem der Personalisierungsanlage ruft die zwischengespeicherten Personalisierungsdaten aus dem Speicher, der beispielsweise als Pufferspeicher oder Datenbank realisiert sein kann, ab, um die Personalisierungsanlage entsprechend anzusteuern. Das Steuerungssystem und die Personalisierungsanlage befinden sich in einer besonders geschützten Hochsicherheits-Produktionsumgebung. Besonders vorteilhaft ist hierbei, dass erst durch das Steuerungssystem die Personalisierungsdaten entschlüsselt werden, sodass diese nicht manipuliert werden können.

Nach einer Ausführungsform der Erfindung werden durch die Personalisierungsanlage Dokumenten-Rohlinge personalisiert, um beispielsweise Ausweis- und/oder Reisedokumente, insbesondere Reisepässe, Personalausweise, Führerscheine, Visa und dergleichen herzustellen.

Die verschiedenen Bestandteile von Ausführungsformen des erfindungsgemäßen Datenverarbeitungssystem, insbesondere die Server, der Konverter und/oder der

Pufferspeicher, können als separate, miteinander vernetzte Komponenten ausgebildet sein. Diese Bestandteile können auch als logische Komponenten, insbesondere in der Form von Softwarekomponenten, auf derselben Hardware oder verteilten Hardwarekomponenten realisiert sein.

In einem weiteren Aspekt betrifft die Erfindung ein Verfahren zum Empfang einer ersten Anforderung eines ersten Formats mit einem ersten Übertragungsprotokoll, wobei die erste Anforderung erste Personalisierungsdaten beinhaltet, und zum Empfang einer zweiten Anforderung eines zweiten Formats mit einem zweiten Übertragungsprotokoll, wobei die zweite Anforderung zweite Personalisierungsdaten beinhaltet, mit folgenden Schritten: Empfang der ersten Anforderung in dem ersten Format mit dem ersten Übertragungsprotokoll durch einen ersten Server und Weiterleitung der ersten Personalisierungsdaten an ein Steuerungssystem einer Personalisierungsanlage, Empfang der zweiten Anforderung in dem zweiten Format mit dem zweiten Übertragungsprotokoll durch einen zweiten Server, und Konvertierung der zweiten Anforderung aus dem zweiten Format in das erste Format und Weiterleitung der in das erste Format konvertierten zweiten Anforderung mit dem ersten Übertragungsprotokoll an den ersten Server, und Weiterleitung der zweiten Personalisierungsdaten von dem ersten Server an das Steuerungssystem der Personalisierungsanlage.

Im Weiteren werden Ausführungsformen der Erfindung mit Bezugnahme auf die Zeichnung näher erläutert. Es zeigen:
- Figur 1: ein Blockdiagramm einer Ausführungsform eines erfindungs- gemäßen Datenverarbeitungssystems,
- Figur 2: ein Flussdiagramm einer Ausführungsform eines erfindungs- gemäßen Verfahrens.

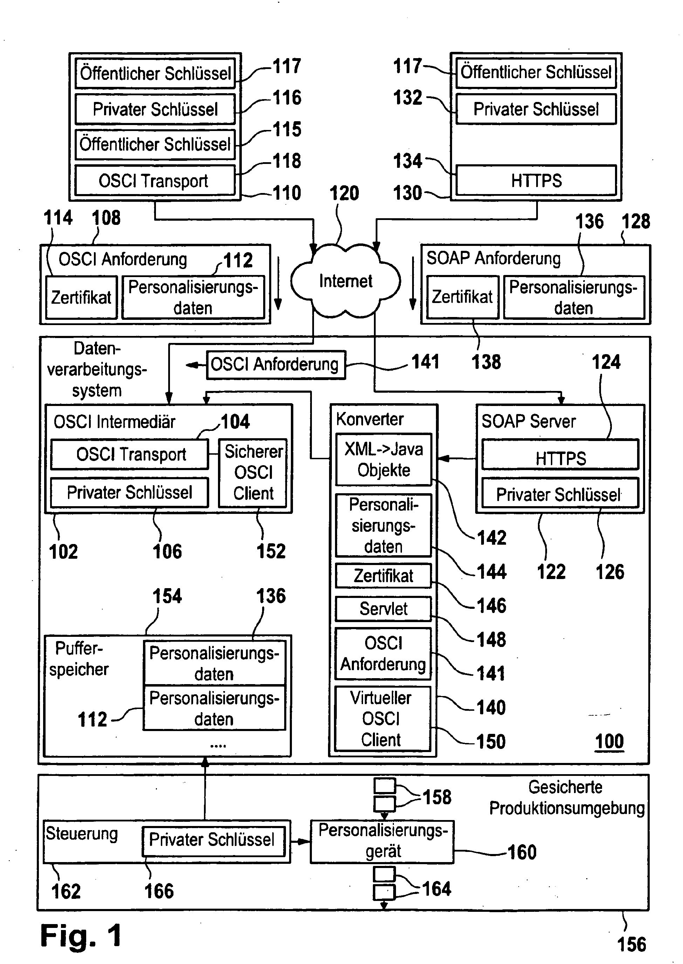

Die Figur 1 zeigt ein Datenverarbeitungssystem 100 mit einem Server 102. In der hier betrachteten Ausführungsform ist der Server 102 als OSCI-Intermediär ausgebildet. Dementsprechend hat der Server 102 eine Programmkomponente 104 zur serverseitigen Implementierung von OSCI-Transport. Der Server 102 hat ferner unmittelbar oder mittelbar Zugriff auf einen privaten Schlüssel 106 und einen öffentlichen Schlüssel 115, der z.B. einem Client 110 zugeordnet ist.

Der Server 102 dient zum Empfang von OSCI-Transport-Nachrichten, insbesondere einer OSCI-Anforderung 108 von dem Client 110, der hier als OSCI-Client ausgebildet ist, und anderen Clients. Bei dem Client 110 kann es sich um den Ersteller der OSCI-Anforderung 108 und/oder deren Absender handeln. Beispielsweise handelt es sich bei dem OSCI-Client um einen Computer einer Behörde, die für die Ausstellung von Ausweis- und Reisedokumenten zuständig ist. Alternativ werden die Aufträge verschiedener Behörden gesammelt und an den Client 110 weitergeleitet, der diese dann gebündelt in der OSCI-Anforderung 108 an den OSCI-Intermediär 102 sendet. Der Client 110 hat Zugriff auf einen öffentlichen Schlüssel 117, der einem privaten Schlüssel 166 einer gesicherten Produktionsumgebung 156 zugeordnet ist.

Die OSCI-Anforderung 108 beinhaltet Personalisierungsdaten 112 in verschlüsselter Form. Die Personalisierungsdaten 112 sind mit dem öffentlichen Schlüssel 117 der gesicherten Produktionsumgebung 156 verschlüsselt, so dass sie nur dort entschlüsselt werden können.

Die Personalisierungsdaten 112 beinhalten die persönlichen Angaben und gegebenenfalls biometrischen Daten derjenigen Personen, für die zum Beispiel Reise- oder Ausweisdokumente erstellt werden sollen. Femer beinhaltet die OSCI-Anforderung 108 ein Zertifikat 114 mit dem öffentlichen Schlüssel 115, der zu dem privaten Schlüssel 116 des Client 110 gehört. Der Client 110 hat eine Programmkomponente 118 zur clientseitigen Implementierung von OSCI-Transport. Die Übertragung der OSCI-Anforderung 108 von dem Client 110 an den Server 102 erfolgt über ein Netzwerk, insbesondere das Internet 120.

Das Datenverarbeitungssystem 100 hat einen weiteren Server 122, der in dem hier betrachteten Ausführungsbeispiel als SOAP-Server implementiert ist. Der Server 122 hat eine Programmkomponente 124 zur serverseitigen Implementierung eines Übertragungsprotokolls, wie zum Beispiel HTTPS. Femer hat der Server 122 mittel-baren oder unmittelbaren Zugriff auf seinen privaten Schlüssel 126.

Der Server 122 dient zum Empfang so genannter SOAP-Envelopes, insbesondere einer SOAP-Anforderung 128 von einem Client 130, der hier als SOAP-Client ausgebildet ist. Der SOAP-Client hat unmittelbaren oder mittelbaren Zugriff auf seinen privaten Schlüssel 132 sowie auf den öffentlichen Schlüssel 117. Femer hat der Client 130 eine Programmkomponente 134, die clientseitig HTTPS implementiert.

Die SOAP-Anforderung 128 beinhaltet Personalisierungsdaten 136 für die Erstellung zum Beispiel von Reise- und/oder Ausweisdokumenten, sowie dies auch für die Personalisierungsdaten 112 der Fall ist. Auch die Personalisierungsdaten 136 sind mit dem öffentlichen Schlüssel 117 verschlüsselt. Die SOAP-Anforderung 128 hat ferner ein Zertifikat 138 mit dem zu dem privaten Schlüssel 132 des Client 130 gehörenden öffentlichen Schlüssel.

Bei dem Client 130 kann es sich um einen Computer einer Behörde handeln, wie zum Beispiel einer für die Ausstellung von Reise- und Ausweisdokumenten autorisierten Stelle. Durch den Client 130 wird für die Behörde eine alternative Zugriffsmöglichkeit auf das Datenverarbeitungssystem 100 für die Übermittlung von Personalisierungsdaten geschaffen. Dies erhöht die Flexibilität hinsichtlich der Ausbildung der Clients, die mit dem Datenverarbeitungssystem 100 interagieren können.

Das Datenverarbeitungssystem 100 hat einen Konverter 140 zur Konvertierung der SOAP-Anforderung 128 in eine OSCI-Anforderung 141, wobei die OSCI-Anforderung 141 prinzipiell gleich aufgebaut ist wie die OSCI-Anforderung 108. Hierzu beinhaltet der Konverter 140 eine Programmkomponente 142 zur Konvertierung der mit der SOAP-Anforderung 128 empfangenen XML-Dateien in Java-Objekte, wie zum Beispiel die Java-Objekte 144 und 146. Beispielsweise beinhaltet das Java-Objekt 144 die Personalisierungsdaten 136 und das Java-Objekt 146. das Zertifikat 138. Die Programmkomponente 142 kann beispielsweise auf der Basis von Apache Axis (Apache Software Foundation - http://ws.apache.org/axis/) oder einem anderen an sich bekannten Programm realisiert sein.

Zur Funktionalität des Konverters 140 gehört ferner ein so genanntes Servlet 148 zur Generierung der OSCI-Anforderung 141 aus den Java-Objekten 144, 146. Das Servlet 148 kann z.B. durch den SOAP Server 122 ausgeführt werden. Ferner hat der Konverter 140 eine Programmkomponente 150, die einen herkömmlichen OSCI-Client emuliert, um dadurch gegenüber dem Server 102 einen OSCI-Client zu schaffen, der sich prinzipiell gleich verhält, wie der OSCI-Client 110.

Im Gegensatz zu dem externen OSCI-Client 110 ist jedoch für den durch die Programmkomponente 150 erzeugten virtuellen OSCI-Client des Konverters 140 keine gegenseitige Authentifizierung auf der Basis des privaten Schlüssels des SOAP Clients mit dem Server 102 möglich, da in dem Konverter 140 nicht der private Schlüssel 132 des Clients 130 zur Verfügung steht, der die SOAP-Anforderung 128 generiert und abgesendet hat. Eine solche gegenseitige Authentisierung zwischen dem Konverter 140 und dem Server 102 ist aber auch nicht unbedingt erforderlich, da ja der Konverter 140 keine externe Komponente ist, sondern zu dem Datenverarbeitungssystem 100 gehört, und da die gegenseitige Authentisierung zwischen dem externen SOAP-Client 130 und dem SOAP-Server 122 Voraussetzung dafür ist, dass der Konverter 140 die OSCI-Anforderung 141 generiert.

Dem wird durch eine Modifikation 152 von OSCI-Transport Rechnung getragen. Durch die Modifikation 152 wird für OSCI Transport eine Ausnahme von dem Authentisierungerfordemis hinsichtlich des virtuellen OSCI-Clients des Konverters 140 definiert. Wenn der Server 102 also die OSCI-Anforderung 141 von dem virtuellen OSCI-Client empfängt, findet keine gegenseitige Authentisierung statt.

Das Datenverarbeitungssystem 100 hat einen Pufferspeicher 154, der zum Beispiel als Datenbank ausgebildet sein kann. In den Pufferspeicher 154 werden die verschlüsselten Personalisierungsdaten zwischengespeichert, nachdem sie von dem Server 102 empfangen worden sind.

In einer gesicherten Produktionsumgebung 156 erfolgt die Personalisierung von Dokumenten-Rohlingen 158 mit einem Personalisierungsgerät 160. Das Personalisierungsgerät 160 wird von einer Steuerung 162 der gesicherten Produktionsumgebung 156 angesprochen. Hierzu fragt die Steuerung 162 Personalisierungsdaten aus dem Pufferspeicher 154 ab, um das Personalisierungsgerät 160 entsprechend für die Personalisierung der Dokumenten-Rohlinge 158 anzusteuern. Nach der Personalisierung in dem Personalisierungsgerät 160 erhält man die fertigen Dokumente 164, insbesondere Reise- oder Ausweisdokumente, die dann per Post an die ausstellende Behörde geschickt werden, um sie an die betreffenden Bürger auszuhändigen. Der Server 102 dient also als Intermediär zwischen den Clients 110 und 130 und der Steuerung 162.

Von besonderem Vorteil ist dabei, dass die Entschlüsselung der Personalisierungsdaten, also insbesondere der Personalisierungsdaten 112 und 136, erst durch die Steuerung 162 in der gesicherten Produktionsumgebung 156 erfolgt, da nur dort der dazu erforderliche private Schlüssel 166 vorliegt. Somit ist eine Manipulation der Personalisierungsdaten außerhalb der gesicherten Produktionsumgebung 156 prinzipiell ausgeschlossen.

Im Betrieb werden Personalisierungsdaten in den OSCI-Client 110 eingegeben, um ein oder mehrere Dokumente, insbesondere Reise- oder Ausweisdokumente, zu bestellen. Die Personalisierungsdaten 112 werden mit dem zu dem privaten Schlüssel 166 gehörenden öffentlichen Schlüssel 117 verschlüsselt. Durch den OSCI-Client 110 wird die OSCI-Anforderung 108 generiert und über das Internet 120 an den Server 102, d.h. den OSCI-Intermediär, gesendet.

Durch Ausführung der Programmkomponenten 118 und 104 erfolgt eine gegenseitige Authentifizierung des OSCI-Client 110 und des Servers 102 unter Verwendung des Zertifikats 114 und der privaten Schlüssel 116 und 106. Nach erfolgreicher Authentifizierung werden die verschlüsselten Personalisierungsdaten 112 von dem Server 102 in dem Pufferspeicher 154 gespeichert.

Zur Bestellung von Dokumenten können auch in den SOAP-Client 130 Personalisierungsdaten eingegeben werden. Der SOAP-Client 130 verschlüsselt die Personalisierungsdaten 136 mit dem zu dem privaten Schlüssel 166 gehörenden öffentlichen Schlüssel 117. Femer generiert der SOAP-Client 130 eine SOAP-Anforderung 128, die die verschlüsselten Personalisierungsdaten 136 sowie sein Zertifikat 138 beinhalten.

Die SOAP-Anforderung 128 wird von dem SOAP-Client 130 über das Internet 120 an den SOAP-Server 122 gesendet. Dies erfolgt nach einer vorhergehenden gegenseitigen Authentisierung von SOAP-Client 130 und SOAP-Server 122 gemäß HTTPS unter Verwendung der privaten Schlüssel 126 und 132 sowie des Zertifikats 138.

Nach dem Empfang der SOAP-Anforderung 128 durch den SOAP-Server 122 wird der Konverter 140 gestartet. Die SOAP-Anforderung 128 beinhaltet das Zertifikat 138 und die Personalisierungsdaten 136 in Form einer oder mehreren XML-Dateien. Diese XML-Dateien können durch eine WSDL-Datei des SOAP-Servers 122 spezifiziert sein, insbesondere wenn dieser einen Webservice zum Empfang der SOAP-Anforderung 128 zur Verfügung stellt. Durch Ausführung der Programmkomponente 142 werden die XML-Dateien, die mit der SOAP-Anforderung 128 empfangen worden sind, in die Java-Objekte 144, 146 transformiert. Dies kann unter Verwendung der WSDL-Datei erfolgen, wie zum Beispiel über XMLBeans oder Apache AXIS.

Das Servlet 148 ruft dann die Methoden der Java-Objekte 144 und 146 auf, um mit den so erhaltenen Daten die OSCI-Anforderung 141 zu generieren. Durch Ausführung der Programmkomponente 150 wird der virtuelle OSCI-Client generiert, von dem die OSCI-Anforderung 141 an den Server 102 mittels OSCI Transport gesendet wird. Dies erfolgt aufgrund der Modifikation 152 der Programmkomponente 104, d.h. von OSCI-Transport, ohne gegenseitige Authentifizierung. Nach dem Empfang der OSCI-Anforderung 141 werden die darin beinhalteten Personalisierungsdaten 136 in verschlüsselter Form in dem Pufferspeicher 154 von dem Server 102 gespeichert.

Die Steuerung 162 ruft nach und nach Personalisierungsdaten aus dem Pufferspeicher 154 ab, um das Personalisierungsgerät 160 damit entsprechend anzusteuern. Nachdem die Steuerung 162 beispielsweise die Personalisierungsdaten 112 abgeholt hat, werden diese mit dem privaten Schlüssel 166, auf den die Steuerung 162 mittelbar oder unmittelbar Zugriff hat, entschlüsselt, um mit den entschlüsselten Personalisierungsdaten das Personalisierungsgerät 160 anzusteuern.

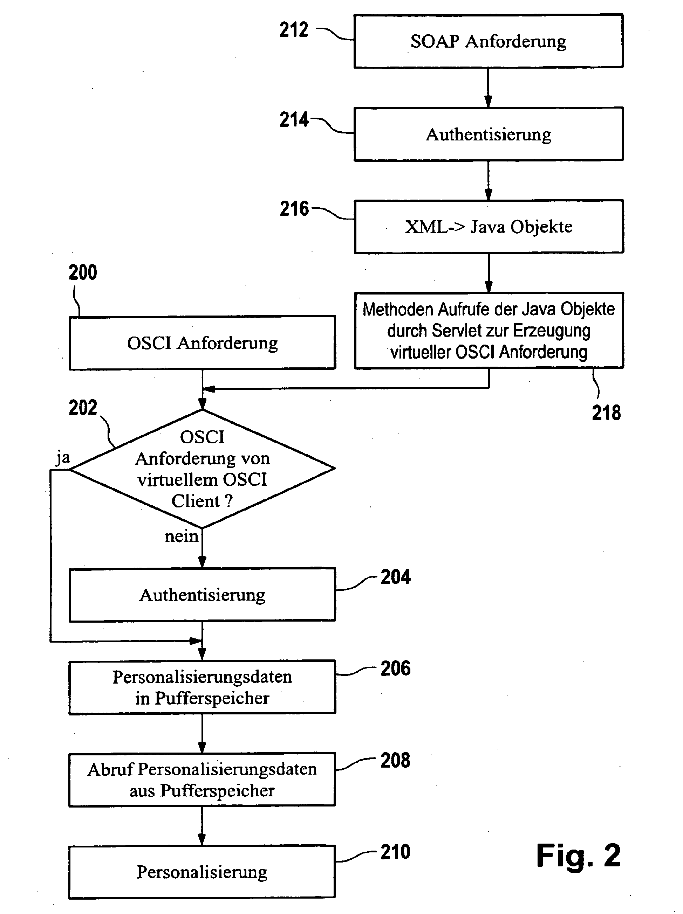

Die Figur 2 zeigt ein entsprechendes Flussdiagramm. In dem Schritt 200 empfängt das Datenverarbeitungssystem eine OSCI-Anforderung über OSCI-Transport. In dem Schritt 202 prüft das Datenverarbeitungssystem, ob die OSCI-Anforderung von einem externen OSCI-Client (vgl. OSCI-Client 110 der Figur 1) oder von einem virtuellen OSCI-Client (vgl. der durch Ausführung der Programmkomponente 150 erzeugte virtuelle OSCI-Client der Figur 1) stammt. Wenn die OSCI-Anforderung nicht von dem virtuellen OSCI-Client stammt, wird in dem Schritt 204 eine gegenseitige Authentisierung zwischen dem externen OSCI-Client und dem OSCI-Server (vgl. Server 102 der Figur 1) durchgeführt. Danach werden die noch verschlüsselten Personalisierungsdaten, die mit der OSCI-Anforderung durch das Datenverarbeitungssystem empfangen worden sind, in einem Pufferspeicher gespeichert (Schritt 206). Wenn in dem Schritt 202 von dem Datenverarbeitungssystem festgestellt worden ist, dass die OSCI-Anforderung von dem virtuellen OSCI-Client stammt, überspringt die Ablaufsteuerung den Schritt 204.

In dem Schritt 208 werden die verschlüsselten Personalisierungsdaten von der Steuerung des Personalisierungsgeräts aus dem Pufferspeicher abgerufen und entschlüsselt. Mit Hilfe der entschlüsselten Personalisierungsdaten steuert die Steuerung (vgl. Steuerung 162 der Figur 1) in dem Schritt 210 das Personalisierungsgerät zur Personalisierung von Dokumenten-Rohlingen an.

In dem Schritt 212 kann das Datenverarbeitungssystem auch eine SOAP-Anforderung empfangen, die verschlüsselte Personalisierungsdaten beinhaltet (vgl. SOAP-Anforderung 128 der Figur 1). In dem Schritt 214 erfolgt eine gegenseitige Authentisierung des SOAP-Clients, von dem die SOAP-Anforderung stammt, und des Datenverarbeitungssystems.

Danach werden die mit der SOAP-Anforderung empfangenen XML-Dateien in Java-Objekte transformiert (Schritt 216). In dem Schritt 218 ruft ein Servlet Methoden der Java-Objekte auf, um dadurch die Daten zu gewinnen, mit Hilfe derer eine virtuelle OSCI-Anforderung generiert wird. Diese virtuelle OSCI-Anforderung ist strukturell gleich aufgebaut wie die in dem Schritt 200 empfangene OSCI-Anforderung und beinhaltet eine Angabe dahingehend, dass die virtuelle OSCI-Anforderung von einem virtuellen OSCI-Client des Datenverarbeitungssystems stammt. Diese virtuelle OSCI-Anforderung wird dann innerhalb des Datenverarbeitungssystems über OSCI-Transport an den OSCI-Intermediär (vgl. Server 102) übertragen, der danach die Prüfung in dem Schritt 202 durchführt.

### Bezugszeichenliste

- 100: Datenverarbeitungssystem
- 102: Server
- 104: Programmkomponente
- 106: privater Schlüssel
- 108: OSCI-Anforderung
- 110: Client
- 112: Personalisierungsdaten
- 114: Zertifikat
- 116: privater Schlüssel
- 117: öffentlicher Schlüssel
- 118: Programmkomponente
- 120: Internet
- 122: Server
- 124: Programmkomponente
- 126: privater Schlüssel
- 128: SOAP-Anforderung
- 130: Client
- 132: privater Schlüssel
- 134: Programmkomponente
- 136: Personalisierungsdaten
- 138: Zertifikat
- 140: Konverter
- 141: Anforderung
- 142: Programmkomponente
- 144: Java-Objekt
- 146: Java-Objekt
- 148: Servelet
- 150: Programmkomponente
- 152: Modifikation
- 154: Pufferspeicher
- 156: Produktionsumgebung
- 158: Dokumenten-Rohlinge
- 160: Personalisierungsgerät
- 162: Steuerung
- 164: Dokumente
- 166: privater Schlüssel

## Patentansprüche

1. Personalisierungssystem mit einer Personalisierungsanlage (160) und mit einem Steuerungssystem (162), wobei das Steuerungssystem zur Ansteuerung der Personalisierungsanlage mit Personalisierungsdaten zur Personalisierung von Dokumenten-Rohlingen (158) durch die Personalisierungsanlage ausgebildet ist, und mit einem Datenverarbeitungssystem zum Empfang einer ersten Anforderung (108) eines ersten Formats mit einem ersten Übertragungsprotokoll (118, 104), wobei die erste Anforderung erste Personalisierungsdaten (112) beinhaltet, und zum Empfang einer zweiten Anforderung (128) eines zweiten Formats mit einem zweiten Übertragungsprotokoll (124, 134), wobei die zweite Anforderung zweite Personalisierungsdaten (136) beinhaltet, mit
- einem ersten Server (102) zum Empfang der ersten Anforderung in dem ersten Format mit dem ersten Übeflragungsprotokoll und zur Weiterleitung der ersten Personalisierungsdaten an ein Steuerungssystem (162) einer Personalisierungsanlage (160),
- einem zweiten Server (122) zum Empfang der zweiten Anforderung in dem zweiten Format mit dem zweiten Übertragungsprotokoll,
- einem Konverter (140) zur Formatkonvertierung der zweiten Anforderung aus dem zweiten Format in das erste Format und zur Weiterleitung der in das erste Format konvertierten zweiten Anforderung (141) mit dem ersten Übertragungsprotokoll an den ersten Server,
wobei der erste Server zur Weiterleitung der zweiten Personalisierungsdaten an das Steuerungssystem ausgebildet ist,
wobei das erste und das zweite Übertragungsprotokoll jeweils eine kryptographische Authentisierung basierend auf einem asymmetrischen Schlüsselpaar beinhalten, wobei eine Authentisierungsfunktion (104; 152) des ersten Servers so ausgebildet ist, dass eine Authentisierung des Konverters gegenüber dem ersten Server für die Weiterleitung der in das erste Format konvertierten zweiten Anforderung (141) nicht vorgesehen ist,
wobei es sich bei dem ersten Format um ein OSCI-Format und bei dem ersten Übertragungsprotokoll um OSCI-Transport handelt,
wobei es sich beim dem zweiten Format um ein Extended Markup Language (XML)-Format und bei dem zweiten Übertragungsprotokoll um SOAP handelt.

2. Personalisierungssystem nach Anspruch 1, mit einem Webservice zum Empfang der zweiten Anforderung.

3. Personalisierungssystem nach einem der vorhergehenden Anspruche, wobei der Konverter folgendes aufweist:
- Mittel (142) zur Erzeugung von einem oder mehreren Objekten (144, 146) eines dritten Formats aus der zweiten Anforderung,
- Mittel (148) zum Aufruf von Methoden der Objekte zur Generierung einer dritten Anforderung (141) des ersten Formats, die die formatikonvertierte zweite Anforderung beinhaltet,
- Mittel (150) zur Weiterleitung der dritten Anforderung an den ersten Server mittels des ersten Übertragungsprotokolls.

4. Personalisierungssystem nach Anspruch 3, mit einer WSDL-Datei zur Spezifizierung des zweiten Formats, wobei es sich bei den Objekten um Java-Objekte handelt und wobei die Erzeugung der Java-Objekte unter Verwendung der WSDL-Datei erfolgt.

5. Personalisierungssystem nach Anspruch 4, wobei die zweite Anforderung ein Zertifikat (138) beinhaltet, und wobei das Zertifikat in ein erstes (146) der Java-Objekte eingebracht wird und wobei die zweiten Personalisierungsdaten in ein zweites (144) der Java-Objekte eingebracht werden.

6. Personalisierungssystem nach einem der vorhergehenden Ansprüche, wobei die Personalisierungsanlage zur Personalisierung von Wert- oder Sicherheitsdokumente ausgebildet ist.

7. Personalisierungssystem nach einem der vorhergehenden Ansprüche mit einem Pufferspeicher (154) zur Speicherung der ersten und zweiten Personalisierungsdaten zur Abholung durch das Steuerungssystem.

8. Personalisierungssystem nach Anspruch 7, wobei das Steuerungssystem zur Entschlüsselung der ersten und zweiten Personalisierungsdaten mit einem privaten Schlüssel (166) ausgebildet ist.

9. Verfahren zum Empfang einer ersten Anforderung (108) eines ersten Formats mit einem ersten Übertragungsprotokoll (104, 118), wobei die erste Anforderung erste Personalisierungsdaten (112) beinhaltet, und zum Empfang einer zweiten Anforderung (128) eines zweiten Formats mit einem zweiten Übetlragungsprotokoll (124, 134), wobei die zweite Anforderung zweite Personalisierungsdaten (136) beinhaltet, wobei das Verfahren zur Personalisierung eines Dokumenten-Rohling (158) dient, mit folgenden Schritten:
- Empfang der ersten Anforderung in dem ersten Format mit dem ersten Übertragungsprotokoll durch einen ersten Server (102) und Weiterleitung der ersten Personalisierungsdaten an ein Steuerungssystem (162) einer Personalisierungsanlage (160),
- Empfang der zweiten Anforderung in dem zweiten Format mit dem zweiten Übertragungsprotokoll durch einen zweiten Server (122),
- Konvertierung der zweiten Anforderung aus dem zweiten Format in das erste Format und Weiterleitung der in das erste Format konvertierten zweiten Anforderung (141) mit dem ersten Übertragungsprotokoll an den ersten Server,
- Weiterleitung der zweiten Personalisierungsdaten von dem ersten Server an das Steuerungssystem der Personalisierungsanlage,
- Personalisierung des Dokumenten-Rohling mit den Personalisierungsdaten durch die Personalisierungsanlage durch Ansteuerung der Personalisierungsanlage von dem Steuerungssystem,
wobei für den Empfang der ersten Anforderung und den Empfang der zweiten Anforderung jeweils eine gegenseitige Authentisierung erfolgt, und wobei der Empfang der in das erste Format konvertierten zweiten Anforderung durch den ersten Server von dem Konverter ohne Authentisierung erfolgt, wobei es sich bei dem ersten Format um ein OSCI-Format und bei dem ersten Übertragungsprotokoll um OSCI-Transport handelt, wobei es sich beim dem zweiten Format um ein Extended Markup Language (XML)-Format und bei dem zweiten Übertragungsprotokoll um SOAP handelt..

10. Verfahren nach Anspruch 9, wobei der Empfang der zweiten Anforderung durch einen Webservice erfolgt.

11. Verfahren nach Anspruch 9 oder 10, mit folgenden weiteren Schritten:
- Erzeugung von einem oder mehreren Objekten (144, 146) aus der zweiten Anforderung,
- Aufruf von Methoden der Objekte zur Instanziierung einer dritten Anforderung (141) des ersten Formats,
- Empfang der dritten Anforderung in dem ersten Format mit dem ersten Übertragungsprotokoll durch den ersten Server zur Weiterleitung der zweiten Personalisierungsdaten an das Steuerungssystem der Personalisierungsanlage.

12. Verfahren nach einem der vorhergehenden Ansprüche 9, 10 oder 11, wobei die Weiterleitung der Personalisierungsdaten an das Steuerungssystem so erfolgt, dass diese zunächst in einem Pufferspeicher (154) zwischengespeichert werden, und dann von dem Steuerungssystem aus dem Pufferspeicher abgerufen werden, wobei die Personalisierungsdaten durch das Steuerungssystem in einer gesicherten Produktionsumgebung (156) entschlüsselt werden.

## Claims

1. Personalization system having a personalization facility (160) and a control system (162), the control system being designed to control the personalization facility with personalization data for personalizing document blanks (158) by means of the personalization facility, and having a data processing system for receiving a first request (108) in a first format using a first transmission protocol (118, 104), the first request containing first personalization data (112), and for receiving a second request (128) in a second format using a second transmission protocol (124, 134), the second request containing second personalization data (136), having
- a first server (102) for receiving the first request in the first format using the first transmission protocol and for forwarding the first personalization data to a control system (162) of a personalization facility (160),
- a second server (122) for receiving the second request in the second format using the second transmission protocol,
- a converter (140) for converting the format of the second request from the second format into the first format and for forwarding the second request (141) which has been converted into the first format to the first server using the first transmission protocol,
the first server being designed to forward the second personalization data to the control system, the first and second transmission protocols each containing cryptographic authentication on the basis of an asymmetrical key pair, an authentication function (104; 152) of the first server being designed in such a manner that the converter is not authenticated with respect to the first server for forwarding the second request (141) which has been converted into the first format,
the first format being an OSCI format and the first transmission protocol being OSCI transport, the second format being an Extended Markup Language (XML) format and the second transmission protocol being SOAP.

2. Personalization system according to Claim 1, having a web service for receiving the second request.

3. Personalization system according to one of the preceding claims, the converter having the following:
- means (142) for generating one or more objects (144, 146) in a third format from the second request,
- means (148) for calling methods of the objects for generating a third request (141) in the first format, said third request containing the second request whose format has been converted,
- means (150) for forwarding the third request to the first server using the first transmission protocol.

4. Personalization system according to Claim 3, having a WSDL file for specifying the second format, the objects being Java objects, and the Java objects being generated using the WSDL file.

5. Personalization system according to Claim 4, the second request containing a certificate (138), and the certificate being introduced into a first (146) of the Java objects, and the second personalization data being introduced into a second (144) of the Java objects.

6. Personalization system according to one of the preceding claims, the personalization facility being designed to personalize valuable or security documents.

7. Personalization system according to one of the preceding claims, having a buffer memory (154) for storing the first and second personalization data for collection by the control system.

8. Personalization system according to Claim 7, the control system being designed to decrypt the first and second personalization data using a private key (166).

9. Method for receiving a first request (108) in a first format using a first transmission protocol (104, 118), the first request containing first personalization data (112), and for receiving a second request (128) in a second format using a second transmission protocol (124, 134), the second request containing second personalization data (136), the method being used to personalize a document blank (158), having the following steps:
- the first request in the first format is received by a first server (102) using the first transmission protocol and the first personalization data are forwarded to a control system (162) of a personalization facility (160),
- the second request in the second format is received by a second server (122) using the second transmission protocol,
- the second request is converted from the second format into the first format and the second request (141) which has been converted into the first format is forwarded to the first server using the first transmission protocol,
- the second personalization data are forwarded from the first server to the control system of the personalization facility,
- the personalization facility personalizes the document blank with the personalization data by virtue of the personalization facility being controlled by the control system,
mutual authentication respectively being carried out for receiving the first request and for receiving the second request, and the second request which has been converted into the first format being received by the first server from the converter without authentication, the first format being an OSCI format and the first transmission protocol being OSCI transport, the second format being an Extended Markup Language (XML) format and the second transmission protocol being SOAP.

10. Method according to Claim 9, the second request being received by a web service.

11. Method according to Claim 9 or 10, having the following further steps:
- one or more objects (144, 146) are generated from the second request,
- methods of the objects are called in order to instantiate a third request (141) in the first format,
- the third request in the first format is received by the first server for forwarding the second personalization data to the control system of the personalization facility using the first transmission protocol.

12. Method according to one of the preceding Claims 9, 10 and 11, the personalization data being forwarded to the control system in such a manner that said data are first of all buffered in a buffer memory (154) and are then retrieved from the buffer memory by the control system, the personalization data being decrypted by the control system in a secure production environment (156).

## Revendications

1. Système de personnalisation comportant un dispositif de personnalisation (160) et un système de commande (162), dans lequel le système de commande est conçu pour attaquer le dispositif de personnalisation avec des données de personnalisation destinées à personnaliser des documents vierges (158) au moyen du dispositif de personnalisation, et un système de traitement de données destiné à recevoir une demande (108) dans un premier format avec un premier protocole de transmission (118, 104), dans lequel la première demande comprend des premières données de personnalisation (112), et à recevoir une deuxième demande (128) dans un deuxième format avec un deuxième protocole de transmission (124, 134), dans lequel la deuxième demande comprend des deuxièmes données de personnalisation (136), comportant
- un premier serveur (102) destiné à recevoir la première demande dans le premier format avec le premier protocole de transmission et à retransmettre les premières données de personnalisation à un système de commande (162) d'un dispositif de personnalisation (160),
- un deuxième serveur (122) destiné à recevoir la deuxième demande dans le deuxième format avec le deuxième protocole de transmission,
- un convertisseur (140) destiné à convertir le format de la deuxième demande du deuxième format en le premier format et à retransmettre au premier serveur la deuxième demande (141) convertie en le premier format avec le premier protocole de transmission,
dans lequel le premier serveur est conçu pour retransmettre les deuxièmes données de personnalisation au système de commande,
dans lequel les premier et deuxième protocoles de transmission comprennent chacun une authentification cryptographique basée sur une paire de clés asymétriques, dans lequel la fonction d'authentification (104 ; 152) du premier serveur est conçue de façon à ce qu'une authentification du convertisseur sur le premier serveur pour la transmission de la deuxième demande (141) convertie en le premier format ne soit pas possible,
dans lequel le premier format est un format OSCI et le premier protocole de transmission est le protocole OSCI-Transport,
dans lequel le deuxième format est un format Extended Markup Language (XML) et le deuxième protocole de transmission est le protocole SOAP.

2. Système de personnalisation selon la revendication 1, comportant un service Web pour la réception de la deuxième demande.

3. Système de personnalisation selon l'une des revendications précédentes, dans lequel le convertisseur comprend :
- un moyen (142) destiné à générer un ou plusieurs objets (144, 146) dans un troisième format à partir de la deuxième demande,
- un moyen (148) destiné à appeler des méthodes des objets pour générer une troisième demande (141) dans le premier format, laquelle demande comprend la deuxième demande à format converti,
- un moyen (150) destiné à transmettre la troisième demande au premier serveur au moyen du premier protocole de transmission.

4. Système de personnalisation selon la revendication 3, comportant un fichier WSDL destiné à spécifier le deuxième format, dans lequel les objets sont des objets Java et dans lequel la génération des objets Java s'effectue par utilisation du fichier WSDL.

5. Système de personnalisation selon la revendication 4, dans lequel la deuxième demande comprend un certificat (138) et dans lequel le certificat est transféré dans un premier (146) des objets Java et dans lequel les deuxièmes données de personnalisation sont transférées dans un deuxième (144) des objets Java.

6. Système de personnalisation selon l'une des revendications précédentes, dans lequel le dispositif de personnalisation est conçu pour personnaliser des documents de valeur ou de sécurité.

7. Système de personnalisation selon l'une des revendications précédentes, comportant une antémémoire (154) destinée à stocker les premières et deuxièmes données de personnalisation afin qu'elles soient extraites au moyen du système de commande.

8. Système de personnalisation selon la revendication 7, dans lequel le système de commande est configuré pour décrypter les premières et deuxièmes données de personnalisation au moyen d'une clé privée (166).

9. Procédé de réception d'une première demande (108) dans un premier format avec un premier protocole de transmission (104, 118), dans lequel la première demande comprend des données de personnalisation (112), et de réception d'une deuxième demande (128) dans un deuxième format avec un deuxième protocole de transmission (124, 134), dans lequel la deuxième demande comprend des deuxièmes données de personnalisation (136), dans lequel le procédé sert à personnaliser un document vierge (158), comprenant les étapes consistant à :
- recevoir la première demande dans le premier format avec le premier protocole de transmission au moyen d'un premier serveur (102) et retransmettre les premières données de personnalisation à un système de commande (162) d'un dispositif de personnalisation (160),
- recevoir la deuxième demande dans le deuxième format avec le deuxième protocole de transmission par l'intermédiaire d'un deuxième serveur (122),
- convertir la deuxième demande du deuxième format en le premier format et retransmettre au premier serveur la deuxième demande (141) convertie en le premier format avec le premier protocole de transmission,
- retransmettre les deuxièmes données de personnalisation du premier serveur au système de commande du dispositif de personnalisation,
- personnaliser le document vierge avec les données de personnalisation au moyen du dispositif de personnalisation par attaque du dispositif de personnalisation par le système de commande,
dans lequel, pour chacune de la réception de la première demande et de la réception de la deuxième demande, une authentification mutuelle est effectuée, et dans lequel la réception en provenance du convertisseur de la deuxième demande convertie dans le premier format est effectuée au moyen du premier serveur sans authentification, dans lequel le premier format est un format OSCI et le premier protocole de transmission est le protocole OSCI-Transport, dans lequel le deuxième format est un format Extended Markup Language (XML) et le deuxième protocole est le protocole SOAP.

10. Procédé selon la revendication 9, dans lequel la réception de la deuxième demande s'effectue au moyen d'un service Web.

11. Procédé selon la revendication 9 ou 10, comprenant en outre les étapes consistant à :
- générer un ou plusieurs objets (144, 146) à partir de la deuxième demande,
- appeler des méthodes des objets pour instancier une troisième demande (141) dans le premier format,
- recevoir la troisième demande dans le premier format avec le premier protocole de transmission au moyen du premier serveur pour retransmettre les deuxièmes données de personnalisation au système de commande du dispositif de personnalisation.

12. Procédé selon l'une des revendications 9, 10 ou 11 précédentes, dans lequel la retransmission des données de personnalisation au système de commande s'effectue de telle façon que celles-ci soient tout d'abord stockées de façon intermédiaire dans une antémémoire (154), puis qu'elles soient extraites de l'antémémoire par le système de commande, dans lequel les données de personnalisation sont décryptées par le système de commande dans un environnement de production sécurisé (156).
